# EUROPEAN PATENT SPECIFICATION

(11) **EP 3 279 968 B1**
(45) Date of publication and mention of the grant of the patent: **13.05.2020**
(21) Application number: 16182434.7
(22) Date of filing: 02.08.2016
(51) Int. Cl.: H01M 2/10

(54) **BATTERY MODULE**
BATTERIEMODUL
MODULE DE BATTERIE

(43) Date of publication of application: 07.02.2018
(73) Proprietor: Robert Bosch GmbH, 70442 Stuttgart (DE); GS Yuasa International Ltd., Kyoto-shi, Kyoto 601-8520 (JP)
(72) Inventor: Lange, Ulrich, 72631 Aichtal (DE); Salziger, Jan, 73728 Esslingen (DE); Hoerlein, Rainer Heinrich, 70499 Stuttgart (DE); Klemen, Thomas, 74360 Ilsfeld / Auenstein (DE); Grauer, Benjamin, 70563 Stuttgart (DE); Loewenau, Lena, 70199 Stuttgart (DE); Angerbauer, Ralf, 71696 Moeglingen (DE); Rosenkranz, Mareen, 71034 Boeblingen (DE); Rychtarik, David, 71701 Schwieberdingen (DE); Schmid-Schoenbein, Christian, 70197 Stuttgart (DE)
(74) Representative: Isarpatent

(56) References cited:
- EP-A2- 2 073 291
- US-A1- 2010 273 044
- US-A1- 2011 008 670

## Description

The invention relates to a battery module which comprises a housing with several compartments, intermediate walls separating adjacent compartments and electrode assemblies that are arranged in the compartments.

### State of the Art

Electrical energy can be stored by means of batteries. Batteries change chemical energy into electrical energy. Particularly, rechargeable batteries are known that can be charged and discharged several times. Battery systems may comprise several battery cells or battery units.

Especially, lithium ion battery units are used in rechargeable batteries or battery systems. Lithium ion battery units have a relatively high energy density. Lithium ion battery units are used for instance in motor vehicles, in particular in electric vehicles (EV), in hybrid electric vehicles (HEV) and in plug-in hybrid vehicles (PHEV).

Lithium ion battery units comprise one or more electrode assemblies. Electrode assemblies have a positive electrode called cathode and a negative electrode called anode. The anode and the cathode are divided from one another by means of a separator. The electrodes and the separator are surrounded by an electrolyte that is normally in liquid state or in solid state. Several electrode assemblies can be connected electrically in series forming a battery unit. Several battery units can be connected electrically in series or in parallel forming a battery system.

Document DE 10 2013 002 847 A1 discloses a battery arrangement that contains several battery cells. The battery cells are arranged within a housing and are separated from one another by walls of the housing. The housing is made of a phase changing material that is in thermal contact with a cooling plate for cooling the battery arrangement.

Document DE 10 2010 012 998 A1 discloses a battery containing a stack of several battery cells. Each battery cells comprises a positive terminal and a negative terminal. Intermediate elements are arranged between the battery cells. The intermediate elements are made of an electrically conducting material and are connected electrically to the terminals of adjacent battery cells.

Document EP 1804 315 A2 discloses a pouch-type battery comprising an electrode assembly with a positive electrode and a negative electrode that is arranged in a pouch. The electrode assembly with the pouch is placed in a hard case surrounding the electrode assembly whereat the electrodes protrude out of the hard case.

Document DE 36 40 206 A1 discloses a battery containing several battery cells that are electrically connected in series. The battery cells are arranged in a line with spacers arranged between two adjacent battery cells.

Document DE 10 2009 028 583 A1 discloses a component composite including a first component and a second component. The contact surface of the first component has a surface structure which has a microstructure overlaid by a nanostructure. An adhesive layer is situated between the first component and the second component for integral connection.

Document US 2014/0011074 discloses a lithium ion battery comprising a terminal which is made of a clad material having a first layer made of aluminium and a second layer made of copper. A further layer made of nickel is arranged between the first layer and the second layer.

Document US 2012/0058360 discloses a clad plate having an aluminium plate and a copper plate that are joined together at side end surfaces via a nickel layer by pressure welding. The nickel layer is arranged between the aluminium plate and a copper plate. US 2011/0008670 describes a battery module comprising a housing with several compartments, intermediate walls separating adjacent compartments and electrode assemblies arranged in the compartments. The intermediate walls comprise a first layer made of copper and a second layer made of aluminium, the intermediate walls being inserted into the material of the housing.

Document DE 10 2014 201 836 A1 discloses a battery cell having an anode and a cathode, whereat an elastic volume compensation element is arranged between the anode and the cathode. The compensation element compensates volume changes of the anode and the cathode.

### Disclosure of the Invention

The invention refers to a battery module, comprising a housing with several compartments, intermediate walls separating adjacent compartments and electrode assemblies arranged in the compartments. Each electrode assembly comprises a positive electrode which is called cathode and a negative electrode which is called anode.

Thereat, the intermediate walls that separate adjacent compartments are made of least one electrically conducting material, in particular metal. The electrodes of the electrode assemblies are electrically connected to the intermediate walls. In particular, the anode of one electrode assembly and the cathode of an adjacent electrode assembly are connected to the same intermediate wall. Hence, the electrode assemblies of the battery module are connected in series. The first layer and the second layer are attached to one another, directly or with an interlayer. The intermediate walls are preferably manufactured by rolling the first layer and the second layer together, eventually with the interlayer arranged in between.

According to the invention, the intermediate walls comprise at least a first layer made of copper and a second layer made of aluminium, whereat the intermediate walls are inserted into the material of the housing such that edges of the intermediate walls are surrounded by the material of the housing, and edges of the first layer comprise a structured surface.

It is sufficient, if only the edges of the first layer that protrude into the material of the housing comprise a structured surface.

According to a further development of the invention, edges of the second layer also comprise a structured surface. It is sufficient, if only the edges of the second layer that protrude into the material of the housing comprise a structured surface.

The structures in the edges are preferably made via laser. That way, desired roughness of the surfaces can be adjusted relatively accurately. The penetration depth of the laser is around 0.1 mm to 0.2 mm.

According to an advantageous embodiment of the invention, the housing of the battery module is made of an electrically insulating material. In particular, the housing of the battery module is made of a polymer material or a plastic material, for example a thermoplastic material. Preferably, the housing of the battery module is made of an electrically insulating material that comprises polyphenylene sulfide (PPS).

Polyphenylene sulfide, which is an organic polymer consisting of aromatic rings linked with sulfides, turns out to be the most suitable polymer. Polyphenylene sulfide has chemical resistance, high tensile strength, slight thermal expansion and is flame retardant.

Preferably, the intermediate walls are inserted into the material of the housing by injection moulding or by an overmoulding process. During the moulding process, the liquid or viscous material of the housing flows into undercuts of the structured surfaces of the edges. Hence, the compartments of the battery module are rendered sealed and gas tight.

According to a further development of the invention, the material of the housing further comprises glass fibres. Glass fibres contribute to mechanical stability of the housing of the battery module.

Preferably, the amount of glass fibres in the material of the housing is in a range between 27,5% and 32,5%. In particular, the amount of glass fibres in the material of the housing is 30%. Said material comprising polyphenylene sulfide with 27,5% to 32,5% of glass fibres is referred to as "PPS-GF (30)". Said amount of 30% of glass fibres renders the material of the housing mechanically stable without compromising chemical resistance.

According to an advantageous embodiment of the invention, the copper layer in the intermediate walls can be replaced by a nickel layer, or the second layer is coated with nickel. Nickel has similar properties as copper with regard to chemical processes in the compartments of the housing.

The housing may comprise a base body, whereat the intermediate walls are tightened within the base body. The compartments are located within the base body and are formed like a bowl that is open on only one side. The housing further comprises a cover that covers the base body and that closes the open side of the compartments.

In particular, the base body of the housing comprises bars that extend across opposite side walls of the base body of the housing. Thereby, the edges of the intermediate walls are embedded by the bars and by the residual base body.

Alternatively, the intermediate walls are arranged, such that the edges of the intermediate walls are surrounded by the material of the housing and/or by a resin matrix that seals compartments.

Advantageously, the compartments of the battery module are sealed and gas tight. In particular, the compartments are surrounded by two intermediate walls, the base body and the cover. Furthermore, an additional gasket may be placed between the base body and the cover. Hence, the gasket is in contact with the side walls and the bars of the base body.

According to a further development of the invention, a cooling plate is integrated into the housing, in particular into the base body of the housing, and the intermediate walls are in thermic contact with the cooling plate. It is also possible, that a separate cooling plate is arranged near the housing. In particular, a cooling fluid flows through the cooling plate.

According to a further development of the invention, the first layer and the second layer of the intermediate walls are bent perpendicularly, such that a vertical part of each layer separates two adjacent compartments, and that a horizontal part of the respective layer borders on only one compartment.

In particular, the horizontal part of at least one layer is in thermic contact with a cooling plate. The cooling plate can be integrated into the housing or can be separate from the housing and arranged near the housing.

The first layer and the second layer of an intermediate wall can be bent such that the vertical parts of the first layer and of the second layer are attached to one another and that the horizontal parts of the first layer and of the second layer extend into the same direction. Hence, the intermediate walls are carried out in an L-form.

Likewise, the first layer and the second layer of an intermediate wall can be bent such that the vertical parts of the first layer and of the second layer are attached to one another and that the horizontal parts of the first layer and of the second layer extend into opposite directions. Hence, the intermediate walls are carried out in a T-form.

According to an advantageous embodiment of the invention, the compartments of the battery module are arranged in a line, and end walls separate the compartments arranged at opposing ends of the line from end plates of the housing. Thereby, the end walls are configured like the intermediate walls, such that the battery module contains only one kind of wall.

Preferable, the end walls of the battery module are electrically connected to contact pins for electrically contacting the battery module. Thus, the battery module is electrically connectable to external components or elements by said contact pins.

According to another advantageous embodiment of the invention, compensation elements are arranged in the compartments. The compensation elements can be arranged within the electrode assemblies between the electrodes of the electrode assemblies. The compensation elements can also be arranged outside the electrode assemblies between the electrode assemblies and the intermediate walls.

Preferably, the compensation elements are made of a fleece material.

A battery module according to the invention is usable advantageously in an electric vehicle (EV), in a hybrid electric vehicle (HEV) or in a plug-in hybrid vehicle (PHEV).

### Advantages of the Invention

The battery module according to the invention permits to include several electrode assemblies for storing electrical energy, whereby the single electrode assemblies do not need a separate housing. All electrode assemblies of the battery module share one common housing. Thus weight and cost of the battery module are decreased. The housing, in particular when made of plastic material, is flexible and allows volume changes or swelling of the electrode assemblies arranged within the housing. Additional compensation elements arranged in the compartments allow further volume changes or swelling of the electrode assemblies. The compartments of the battery module allow different kinds of electrode assemblies to be inserted, for example stacked type electrode assemblies or jelly rolls. It is also possible to insert whole pouch-cells in the compartments.

The intermediate walls achieve several functions. The intermediate walls divide respectively separate the compartments of the battery module from one another. Also, the intermediate walls allow electrical connection from one electrode assembly to adjacent electrode assemblies. Furthermore, the intermediate walls serve as heat conductors transporting thermal energy that is produced in the electrode assemblies to a cooling plate.

Advantageously, the compartments of the battery module are sealed and gas tight. The material of the housing as well as the intermediate walls are impermeable to humidity or electrolyte solvent, in particular ethylene carbonate and dimethyl carbonate. The compartments are surrounded for example by two intermediate walls, the base body and the cover. Hence, liquid electrolyte can be filled into the compartments such that the electrode assemblies are surrounded by liquid electrolyte. Diffusion of electrolyte and water out of the housing or into the housing is prevented. In particular, when the thermoplastic material of the housing flows into undercuts of the structured surfaces of the layers of the intermediate walls, no spaces remain and electrolyte leakage in the compartments is prevented.

### Brief Description of the Drawings

For a better understanding of the aforementioned embodiments of the invention as well as additional embodiments thereof, reference should be made to the description of embodiments below, in conjunction with the appended drawings showing:
- Figure 1: a perspective, three dimensional view at a battery module according to a first embodiment and a cooling plate,
- Figure 2: an exploded view at the battery module of figure 1,
- Figure 3a: a first style of an intermediate wall,
- Figure 3b: a second style of an intermediate wall,
- Figure 4: a perspective, three dimensional view at a base body of a housing of the battery module of figure 1,
- Figure 5: a perspective, three dimensional view at the base body of figure 4 with electrode assemblies inserted,
- Figure 6: a sectional view at the battery module of figure 1,
- Figure 7: an augmented presentation of an area from figure 6 showing an alignment of an intermediate wall and the cover of the housing of the battery module,
- Figure 8: a perspective, three dimensional view at a battery module according to a second embodiment,
- Figure 9: an exploded view at the battery module of figure 8,
- Figure 10: a perspective, three dimensional view at the battery module of figure 8 with removed cover,
- Figure 11: a three dimensional sectional view at the battery module of figure 8,
- Figure 12a: a front view at a first layer of an intermediate wall as shown in figure 6,
- Figure 12b: a front view at a second layer of an intermediate wall as shown in figure 6,
- Figure 13: an augmented sectional view at an intermediate wall inserted into material of a housing and
- Figure 14: a schematic sectional view at an electrode assembly.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

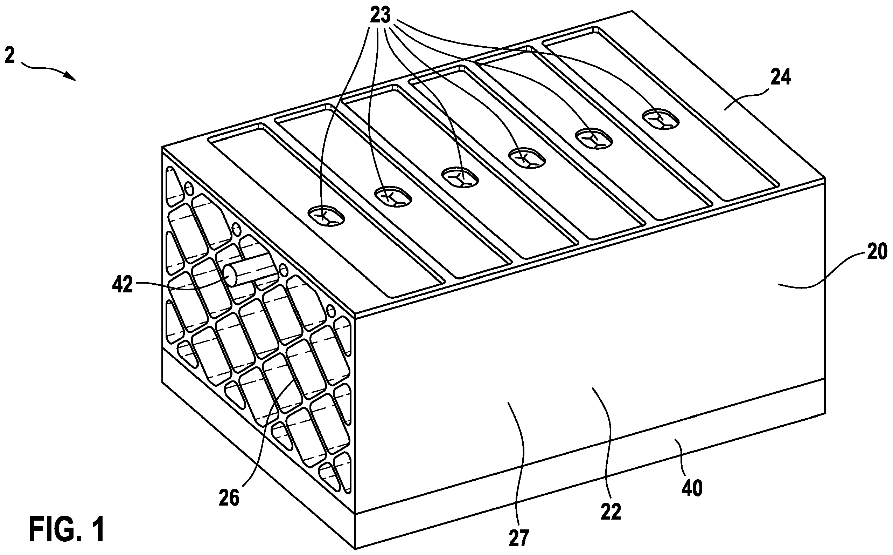

Figure 1 shows a perspective three dimensional view at the battery module 2 according to a first embodiment and a cooling plate 40. The battery module 2 contains a housing 20 which has a prismatic shape and which is arranged on the cooling plate 40. The housing 20 contains a base body 22 which is covered by a cover 24.

The base body 22 of the housing 20 is made of an electrically insulating material, in particular of a polymer material or a plastic material, for example a thermoplastic material. Also the cover 24 of the housing 20 is made of an electrically insulating material, in particular of a polymer material or a plastic material, for example a thermoplastic material.

The base body 22 of the housing 20 contains two side walls 27, two end plates 26 and a bottom plate 25 which is not visible in this presentation. Contact pins 42 for electrical connection of the battery module 2 to other elements protrude from the end plates 26 out of the base body 22 of the housing 20. The cover 24 contains several apertures 55 which are covered by caps 23. Said apertures 55 serve for filling electrolyte into the interior of the housing 20.

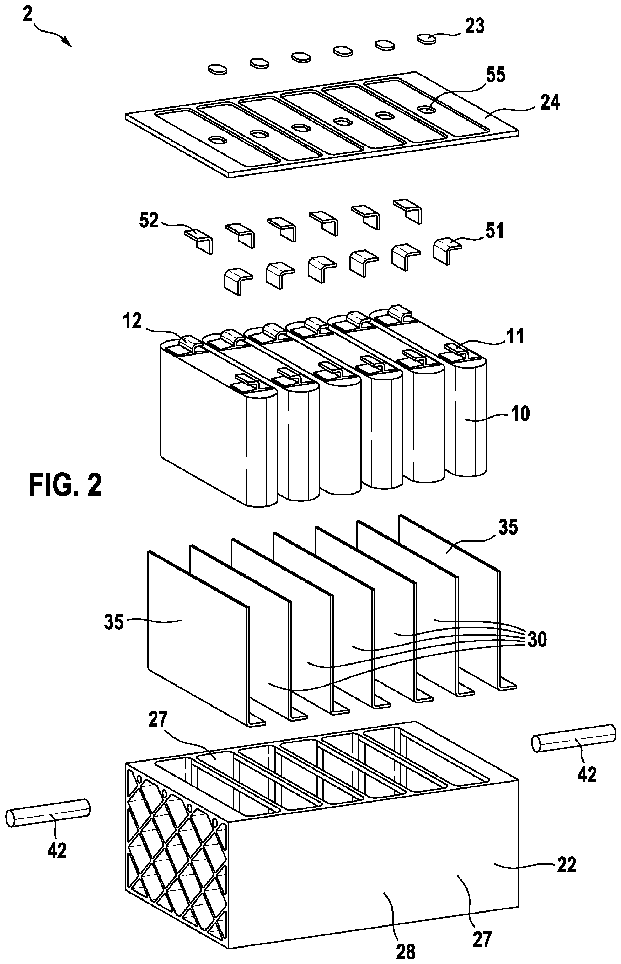

In figure 2 an exploded view of the battery module 2 of figure 1 is given. The base body 22 contains several bars 28 that extend from one side wall 27 to the opposite side wall 27. Within the base body 22 of the housing 20, several intermediate walls 30 are arranged. Also, two end walls 35 are arranged within the base body 22 of the housing 20. Thereby, the intermediate walls 30 are arranged between the end walls 35.

The contact pins 42 are electrically connected to the end walls 35. The end walls 35, the intermediate walls 30 as well as contact pins 42 are made of electrically conducting material. The contact pins 42 are in particular made of aluminium or copper. The contact pins 42 are, for example, welded, bonded or soldered with the end walls 35.

The battery module 2 further contains several electrode assemblies 10, which are arranged in a line between the intermediate walls 30 and between the end walls 35. Each electrode assembly 10 contains an anode 11 and a cathode 12. The anodes 11 and the cathodes 12 of the electrode assemblies 10 protrude parallel to each other into the same direction, namely into the direction towards the cover 24. Negative connecting elements 51 are provided for an electrical connection of the anodes 11. Positive connecting elements 52 are provided for electrical connection of the cathodes 12.

Presently, the electrode assemblies 10 are shaped as jelly rolls. That means the anode 11 and the cathode 12 of the electrode assemblies 10 are flat foils that are wound about an axis. A separator 18 that is also a flat foil and that is not shown in this figure is wound between the anode 11 and the cathode 12 about the same axis. The separator 18 which is made of an electrically insulating material is wound as an external layer around the jelly roll. Hence, the electrode assembly 10 is electrically insulated towards the intermediate walls 30 and towards the end walls 35.

The electrode assemblies 10 can also be of pouch type, for example. That means the anode 11 and the cathode 12 of the electrode assemblies 10 consist of several flat foils that are stacked alternately to form a pile or a stack. Foils of the separator 18 are stacked between the foils of the anode 11 and the foils of the cathode 12. A bag or a pouch made of an electrically insulating material surrounds the electrode assembly 10 such that the electrode assembly 10 is electrically insulated towards the intermediate walls 30 and towards the end walls 35.

In production, after fitting the cover 24 to the base body 22 of the housing 20, liquid electrolyte is filled through the apertures 55 of the cover 24. Hence, the electrode assemblies 10 are surrounded by liquid electrolyte. Afterwards, these apertures 55 are closed by the caps 23.

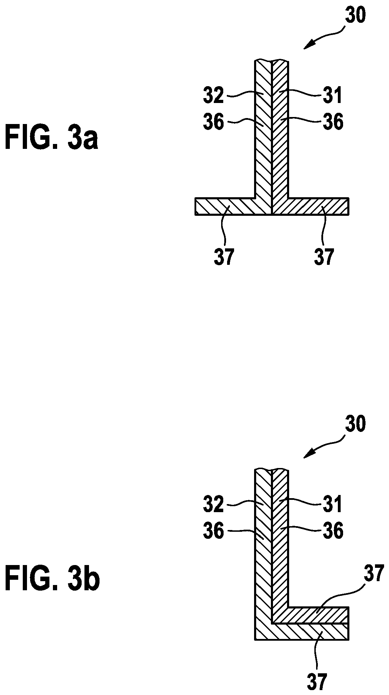

In figure 3a, a first style of an intermediate wall 30 is given. The intermediate wall 30 is designed as a clad material. The intermediate wall 30 according to figure 3a contains a first layer 31 which is presently made of copper. The intermediate wall 30 also contains a second layer 32 which is presently made of aluminium.

The first layer 31 and the second layer 32 are both bend perpendicularly such that a vertical part 36 and a horizontal part 37 are developed. The vertical part 36 of the first layer 31 is aligned with the vertical part 36 of the second layer 32. The horizontal part 37 of the first layer 31 extends into the opposite direction as the horizontal part 37 of the second layer 32. Hence, the intermediate wall 30 is shaped in a T-form.

In figure 3b, a second style of an intermediate wall 30 is given. The intermediate wall 30 is also designed as a clad material. The intermediate wall 30 according to figure 3b also contains a first layer 31 which is presently made of copper. The intermediate wall 30 also contains a second layer 32 which is presently made of aluminium.

The first layer 31 and the second layer 32 are both bend perpendicularly such that a vertical part 36 and a horizontal part 37 are developed. The vertical part 36 of the first layer 31 is aligned with the vertical part 36 of the second layer 32. In contrast to the first style shown in figure 3a, the layers 31 and 32 of the intermediate wall 30 according to the second style shown in figure 3b are bent into the same direction. That means, the horizontal part 37 of the first layer 31 and the horizontal part 37 of the second layer 32 protrude into the same direction. Hence, the intermediate wall 30 is shaped in an L-form.

The end walls 35 are not shown here explicitly. Presently, the end walls 35 have the same shape as the intermediate walls 30. That means, the end walls 35 are also designed as a clad material. The end walls 35 also contain a first layer 31 which is presently made of copper and a second layer 32 which is presently made of aluminium. The first layer 31 and the second layer 32 of end walls 35 are both bend perpendicularly such that a vertical part 36 and a horizontal part 37 are developed.

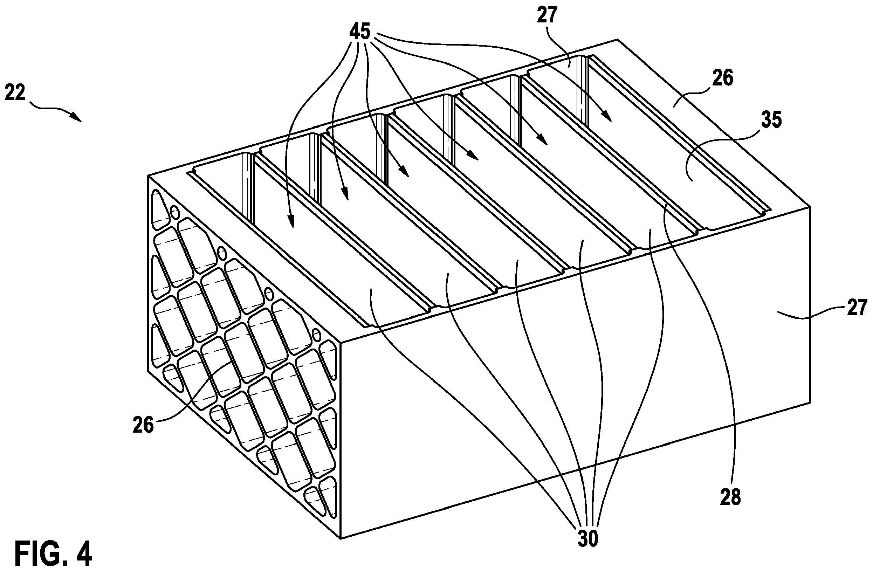

In figure 4, a perspective three dimensional view at the base body 22 of the housing 20 of the battery module 2 is given. As described earlier, the base body 22 has two side walls 27, two end plates 26 and a bottom plate 25 which is not visible in this presentation. The end walls 35 are inserted into the base body 22 such that the end walls 35 are arranged adjacent to the end plates 26 and perpendicular to the side walls 27.

Between the end plates 26 and between the end walls 35, the intermediate walls 30 are arranged. In between the intermediate walls 30 as well as between intermediate walls 30 and end walls 35, several compartments 45 are developed. The compartments 45 are formed like bowls that are open on only one side, namely towards the cover 24 of the housing 20. These compartments 45 serve for insertion of the electrode assemblies 10 of the battery module 2, which are not shown here.

The intermediate walls 30 are inserted into the material of the base body 22 of the housing 20, such that the edges of the intermediate walls 30 are surrounded by the material of the base body 22 of the housing 20. In particular, the edges of the intermediate walls 30 are embedded into the bars 28 that extend across the opposite side walls 27 of the base body 22 and into the residual base body 22 of the housing 20.

Likewise, the end walls 35 are inserted into the material of the base body 22 of the housing 20, such that the edges of the end walls 35 are surrounded by the material of the base body 22 of the housing 20. In particular, the edges of the end walls 35 are also embedded into the bars 28 that extend across the opposite side walls 27 of the base body 22 and into the residual base body 22 of the housing 20.

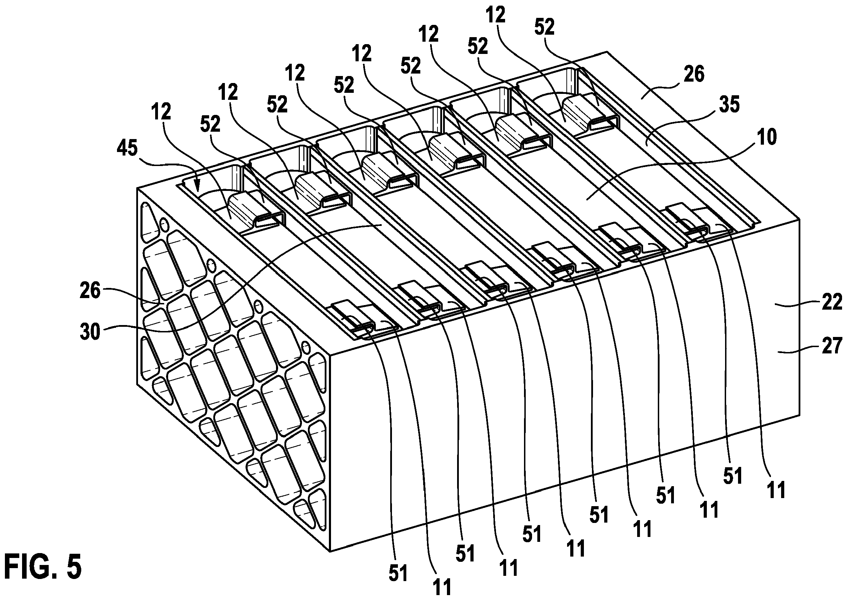

Figure 5 shows a perspective three dimensional view at the base body 22 according to figure 4 with electrode assemblies 10 inserted. As described earlier, the base body 22 contains several compartments 45 which are separated from one another by intermediate walls 30. Each compartment 45 presently holds one electrode assembly 10. It is also possible to insert several electrode assemblies 10 into one compartment 45.

The anodes 11 of the electrode assemblies 10 are electrically connected to the first layer 31 of the adjacent intermediate wall 30. The anode 11 of the electrode assembly 10 that is arranged at the end of the line is electrically connected to the first layer 31 of the adjacent end wall 35.The cathodes 12 of the electrode assemblies 10 are electrically connected to the second layer 32 of the adjacent intermediate wall 30. The cathode 12 of the electrode assembly 10 that is arranged at the end of the line is electrically connected to the second layer 32 of the adjacent end wall 35.

Thereby, the anode 11 of one electrode assembly 10 and the cathode 12 of an adjacent electrode assembly 10 are connected to the same intermediate wall 30. Hence, the electrode assemblies 10 of the battery module 2 are connected in series.

Thereby, the negative connecting elements 51 serve for electrical connection of the anodes 11 of the electrode assemblies 10 to the first layers 31 of the intermediate walls 30 or the end walls 35. Furthermore, the positive connecting elements 52 serve for electrical connection of the cathodes 12 of the electrodes assemblies 10 to the second layers 32 of the intermediate walls 30 or the end wall 35.

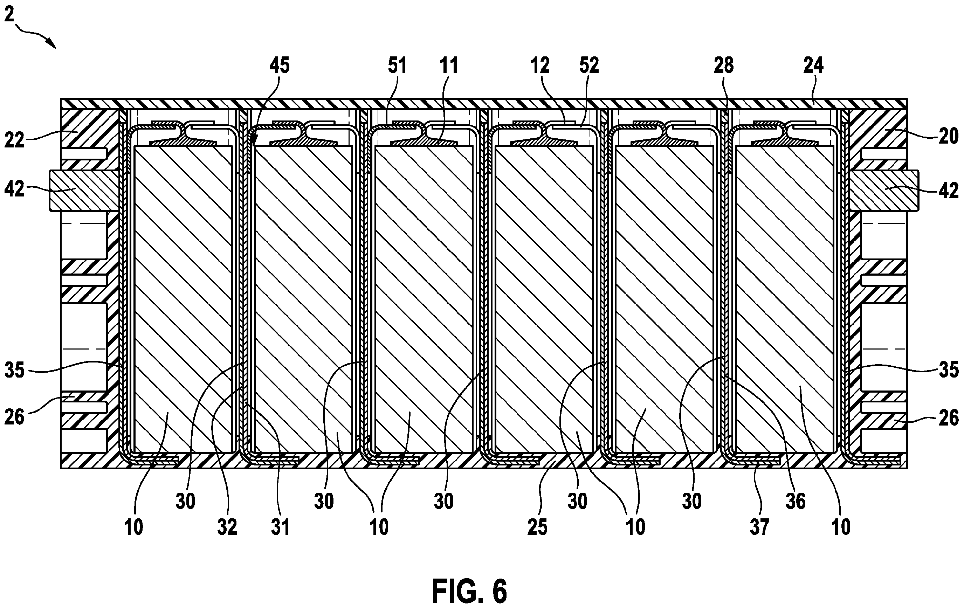

Figure 6 shows a sectional view at the battery module 2 which is given in figure 1. The electrode assemblies 10 are inserted into the compartments 45 which are formed between the intermediate walls 30, the end walls 35, the side walls 27 of the base body 22 of the housing 20 and the bottom plate 25 of the base body 22 of the housing 20.

The first layer 31 of each intermediate wall 30 is electrically connected to the anode 11 of an adjacent electrode assembly 10 via a negative connecting element 51. The second layer 32 of each intermediate wall 30 is electrically connected to the cathode 12 of an adjacent electrode assembly 10 via a positive connecting element 52. That way the electrode assemblies 10 are electrically connected in series.

The first layer 31 of one end wall 35 is electrically connected to the anode 11 of the electrode assembly 10 arranged at one end of the line via a negative connecting element 51. The second layer 32 of the other end wall 35 is electrically connected to the cathode 12 of the electrode assembly 10 arranged at the other end of the line via a positive connecting element 52. The contact pins 42 are electrically connected to the end walls 35. Thereby, the contact pins 42 protrude from the end walls 35 through the end plates 26 out of the housing 20 of the battery module 2.

The intermediate walls 30 extend between two electrode assemblies 10 and extend into the bottom plate 25 of the base body 22. That means the vertical parts 36 of the intermediate walls 30 separate two adjacent compartments 45 and the horizontal parts 37 of the intermediate walls 30 each border only one compartment 45.

The battery module 2 may contain a cooling plate 40 which can be integrated in particular within the bottom plate 25. It is also possible to arrange the battery module 2 onto a separate cooling plate 40, as for example shown in figure 1. In particular, a cooling fluid flows through the cooling plate 40.

In both cases, heat that is produced within the electrode assemblies 10 arranged in the compartments 45 is transported via the intermediate walls 30 end via the end walls 35 towards the cooling plate 40. In particular, the vertical parts 36 of the intermediate walls 30 end of the end walls 35 transport the produced heat towards the horizontal parts 37 of the intermediate walls 30 end of the end walls 35. The horizontal parts 37 of the intermediate walls 30 end of the end walls 35 deliver the heat to the cooling plate 40.

A gasket which is not shown here may be placed between the base body 22 and the cover 24 of the housing 20 of the battery module 2. Hence, the gasket is in contact with the side walls 27 and with the bars 28 of the base body 22. Hence, the compartments 45 of the battery module 2 are sealed and gas tight. Thus, electrolyte contained in the compartments 45 cannot escape the battery module 2. Also, water cannot enter into the compartments 45. The cover 24 can also be adhered to the base body 22 such that the compartments 45 of the battery module 2 are sealed and gas tight.

The increase impermeability of the housing 20 and to prevent diffusion of water and electrolyte into the housing 20 and out of the housing 20, a thin metallic layer can be applied to the on the cover 24 as well as on the base body 22 of the housing 20.

In an alternative embodiment, the electrode assemblies 10 can be inserted into a diffusion resistant pouch and the electrolyte is filled into said pouch. In this case, the intermediate walls 30 as well as the end walls 35 can be made of one single layer, for example of aluminium.

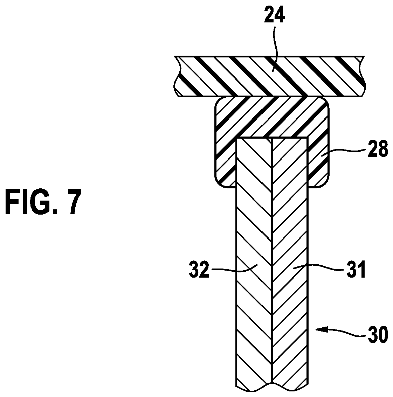

Figure 7 shows an augmented presentation of an upper area from figure 6 showing an alignment of an intermediate wall 30 to the cover 24 of the housing 20 of the battery module 2. The edge of the intermediate wall 30 protrudes into the bar 28 of the base body 22 of the housing 20. Thereby, the edge of the intermediate wall 30 is surrounded by the bar 28. The bar 28 is connected to the cover 24, in particular by adhering, welding or bonding.

Likewise, the end walls 35 that are not shown here are aligned to the cover 24 of the housing 20. Thereby, the edges of the end walls 35 protrude into bars 28 of the base body 22 of the housing 20 that are located adjacent to the end plates 26. Hence, also the edges of the end walls 35 are surrounded by bars 28. The bars 28 that are located adjacent to the end plates 26 are also connected to the cover 24, in particular by adhering, welding or bonding.

Figure 1 shows a perspective three dimensional view at the battery module 2 according to a second embodiment. The battery module 2 according to the second embodiment is assembled similar to the battery module 2 according to the first embodiment; therefore in particular the differences will be explained in the following.

The battery module 2 according to the second embodiment contains a housing 20 which has a prismatic shape and which contains a base body 22 which is covered by a cover 24. Sleeves 60 protrude the base body 22 and the cover 24 of the housing 20. The sleeves 60 are hollow in the middle and allow screws to stick out for fastening the battery module 2.

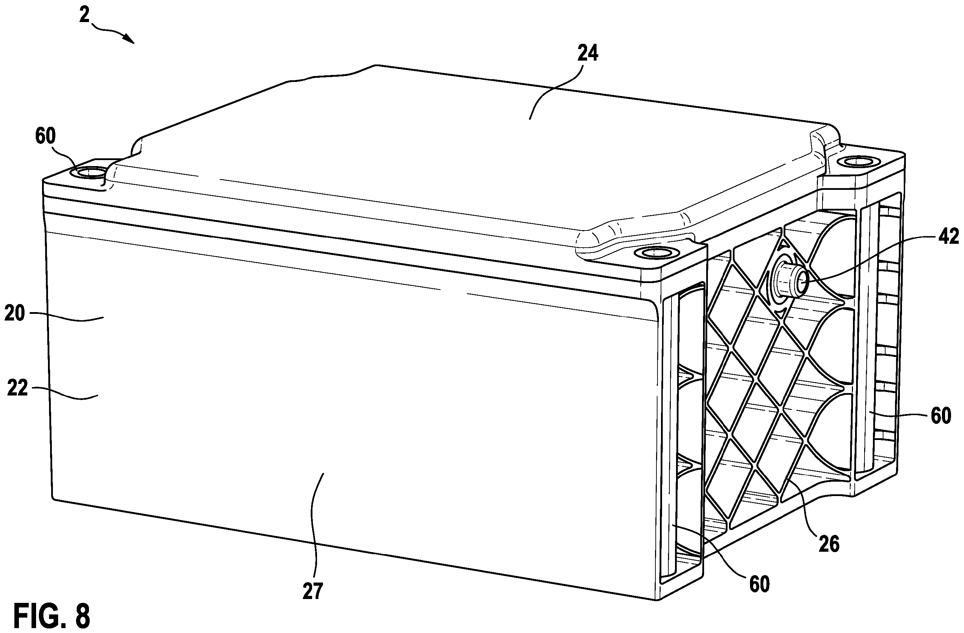

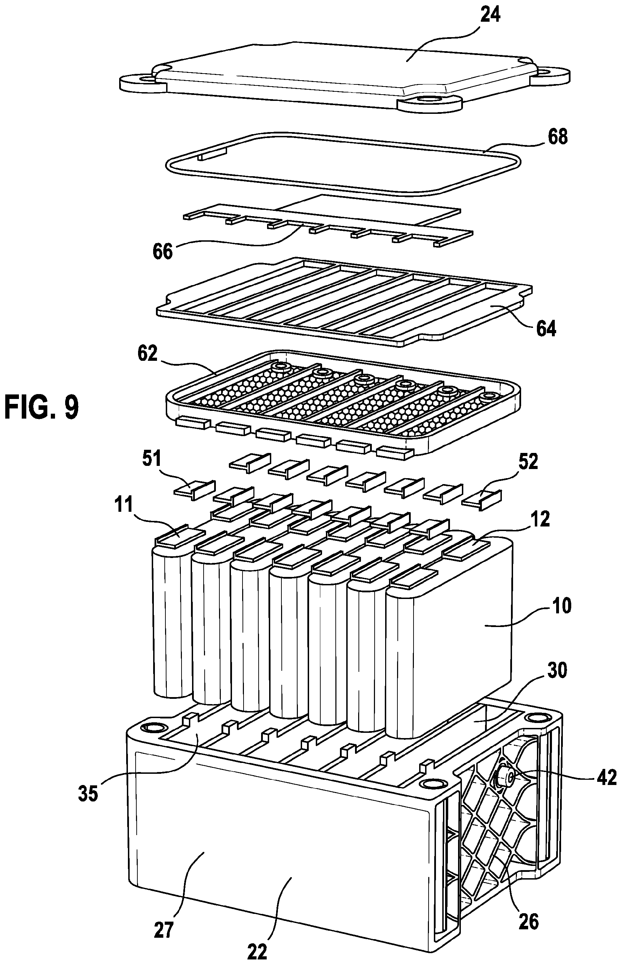

Figure 9 shows an exploded view at the battery module 2 of figure 8. In opposite to the first embodiment, the base body 22 does not contain bars 28, and the cover 24 does not contain apertures 55. Therefore, no caps 23 for covering apertures 55 are provided.

The battery module 2 however contains an intermediate lid 62 which is made of an electrically insulating material. The intermediate lid 62 covers and insulates the anodes 11 and the cathodes 12 of the electrode assemblies 10, the end walls 35, the intermediate walls 30 and the connecting elements 51, 52.

The intermediate lid 62 has a structured surface with recesses that are filled with a resin matrix 64. In production, the resin matrix 64 is casted in liquid state into the recesses of the intermediate lid 62 and is curing afterwards. The resin matrix 64 also seals spaces between the intermediate lid 62 and the base body 22. Hence, the compartments 45 for receiving the electrode assemblies 10 are sealed and gas-tight.

A circuit board 66 which contains electronic circuits for control and supervision of the battery module 2 is placed over the intermediate lid 62 and over the resin matrix 64. The circuit board 66 is electrically connected to the intermediate walls 30 and the end walls 35.

The intermediate lid 62 also contains a groove which is filled with a resin adhesive 68. In production, the resin adhesive 68 is casted in liquid state into the groove of the intermediate lid 62 and is curing afterwards. The resin adhesive 68 fastens the cover 24 to the intermediate lid 62, whereat the circuit board 66 is placed between the cover 24 and the intermediate lid 62.

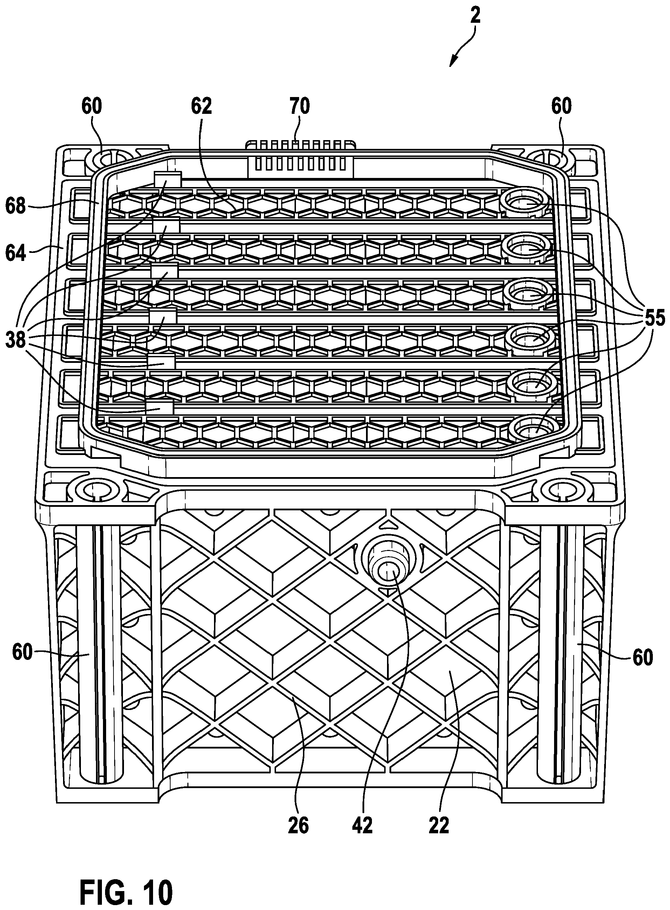

Figure 10 shows a perspective, three dimensional view at the battery module 2 of figure 8 with removed cover 24. The intermediate lid 62 contains apertures 55 through which liquid electrolyte can be filled into the compartments 45. After filling electrolyte into the compartments 45, the apertures 55 are closed by plugs that are not shown here. In this view, the circuit board 66 also is removed. An interface 70 serves for electrically connecting the circuit board 66 to a superior control unit, for example via a bus system.

The intermediate walls 30 as well as the end walls 35 each comprise a tag 38 that protrudes through the intermediate lid 62 and through the resin matrix 64. The tags 38 serve for electrical connection of the intermediate walls 30 and the end walls 35 to the circuit board 66. The tags 38 are vertical extensions of the vertical parts 36 of the intermediate walls 30 and the end walls 35.

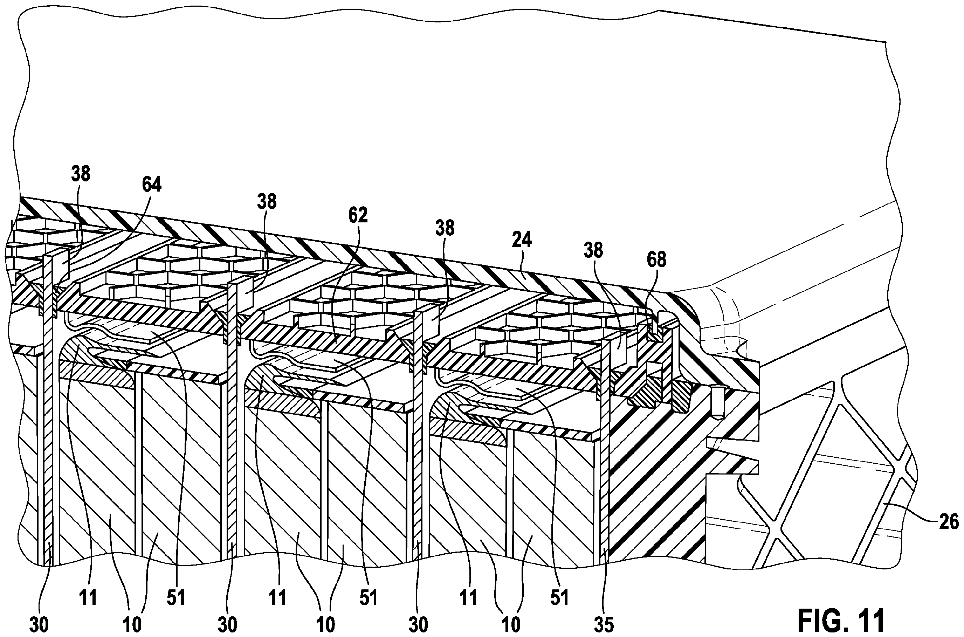

Figure 11 shows a three dimensional sectional view at the battery module 2 of figure 8. The end wall 35 that is visible in this view presently only contains one layer which is made of aluminium, like the second layer 32 of the intermediate walls 30. But, the end wall 35 can also contain an additional first layer 31 made of copper.

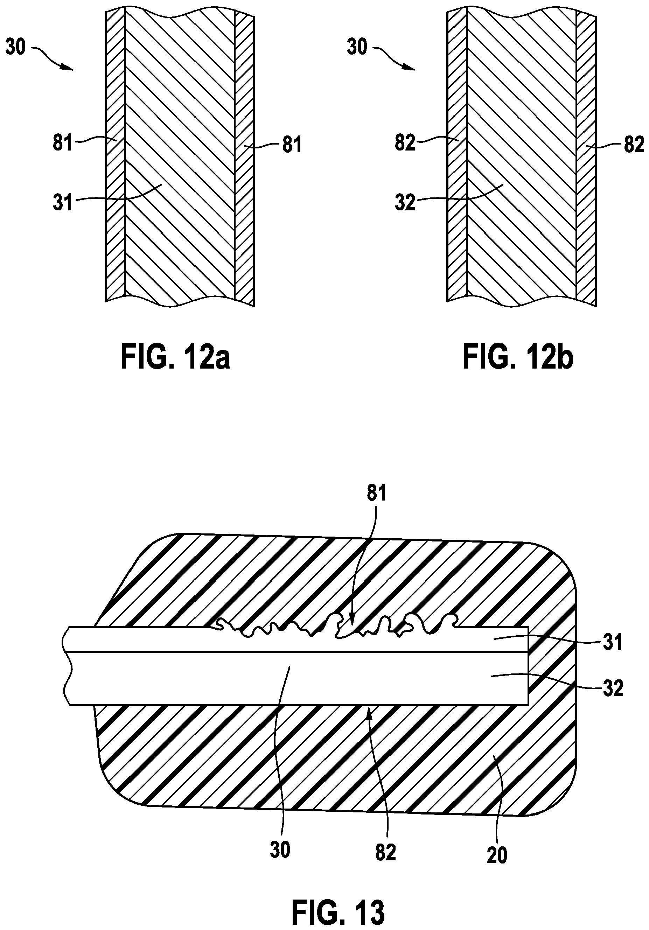

Figure 12a shows a front view at a first layer 31 of an intermediate wall 30 as shown in figure 6. As mentioned already, the intermediate wall 30 is designed as a clad material and the first layer 31 of the intermediate wall 30 is made of copper.

When the intermediate wall 30 is inserted into the material of the housing 20 of the battery module 2, edges 81 of the first layer 31 are surrounded by the material of the housing 20. Said edges 81 of the first layer 31 that are located in border areas of the first layer 31 comprise a structured or rough surface. Alternatively, the whole first layer 31 including the edges 81 of the first layer 31 may have a structured or rough surface.

Figure 12b shows a front view at a second layer 32 of an intermediate wall 30 as shown in figure 6. As mentioned already, the intermediate wall 30 is designed as a clad material and the second layer 32 of the intermediate wall 30 is made of aluminium.

When the intermediate wall 30 is inserted into the material of the housing 20 of the battery module 2, edges 82 of the second layer 32 are surrounded by the material of the housing 20. Said edges 82 of the second layer 32 that are located in border areas of the second layer 32 comprise a structured or rough surface. Alternatively, the whole second layer 32 including the edges 82 of the second layer 32 may have a structured or rough surface.

Figure 13 shows an augmented sectional view at an intermediate wall 30 inserted into material of a housing 20, In the embodiment given here, the edges 81 of the first layer 31 of the intermediate wall 30 comprise a structured surface, whereas the edges 82 of the second layer 32 of the intermediate wall 30 have a flat surface without structures.

The intermediate wall 30 is inserted into the material of the housing 20 by an overmoulding process. During said moulding process, the liquid or viscous material of the housing 20 flows into undercuts of the structured surfaces of the edges 81 of the first layer 31 of the intermediate wall 30.

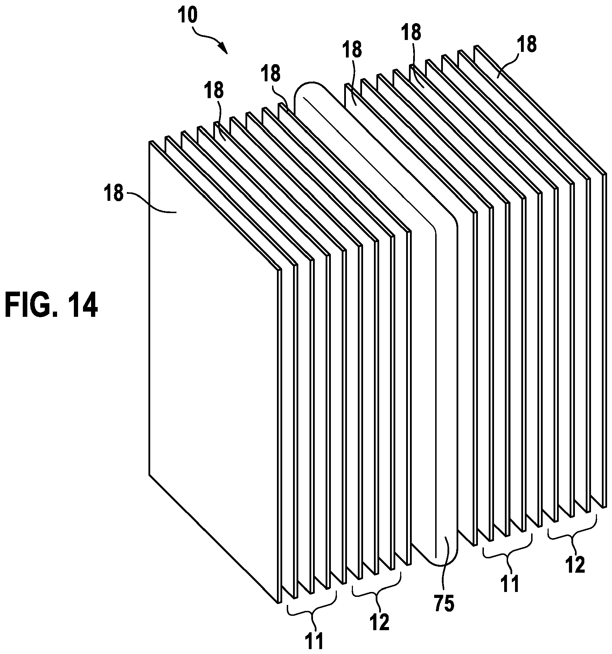

Figure 14 shows a schematic sectional view at an electrode assembly 10. In the embodiment given here, the anode 11 and the cathode 12 of the electrode assembly 10 consist of several flat foils that are stacked alternately to form a stack. Foils of a separator 18 are stacked between the foils of the anode 11 and the foils of the cathode 12.

A compensation element 75 is arranged within the electrode assembly 10. The compensation element 75 is arranged between foils of the anode 11 and foils of the cathode 12. In particular, the compensation element 75 is arranged between two foils of the separator 18 that face the foils of the anode 11 and the foils of the cathode 12. In the embodiment given here, the compensation element 75 is made of a fleece material.

When the electrode assembly 10 is arranged within a compartment 45 of the housing 20 of the battery module 2, then the compensation element 75 is also arranged in said compartment 45. Alternatively or additionally, a compensation element 75 can be arranged in a compartment 45 of the housing 20 of the battery module 2 but outside the electrode assembly 10 between the electrode assembly 10 and an intermediate wall 30.

In production of the intermediate walls 30, the second layer 32 made of aluminium can be initially coated with nickel.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings as encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Battery module (2), comprising
a housing (20) with several compartments (45),
intermediate walls (30) separating adjacent compartments (45) and electrode assemblies (10) arranged in the compartments (45), **characterised in that**
the intermediate walls (30) comprise at least a first layer (31) made of copper and a second layer (32) made of aluminium,
the intermediate walls (30) are inserted into the material of the housing (20) such that edges (81, 82) of the intermediate walls (30) are surrounded by the material of the housing (20), and
edges (81) of the first layer (31) comprise a structured surface.

2. Battery module (2) according to claim 1, **characterised in that** edges (82) of the second layer (32) comprise a structured surface.

3. Battery module (2) according to one of the preceding claims, **characterised in that**
the housing (20) is made of an electrically insulating material that comprises polyphenylene sulfide (PPS).

4. Battery module (2) according to claim 3, **characterised in that** the material of the housing (20) further comprises glass fibres.

5. Battery module (2) according to claim 4, **characterised in that** the amount of glass fibres in the material of the housing (20) is in a range between 27,5% and 32,5%.

6. Battery module (2) according to one of the preceding claims, **characterised in that**
the second layer (32) is coated with nickel.

7. Battery module (2) according to one of the preceding claims, **characterised in that**
compensation elements (75) are arranged in the compartments (45).

8. Battery module (2) according to claim 7, **characterised in that** the compensation elements (75) are made of a fleece material.

9. Battery module (2) according to one of the preceding claims, **characterised in that**
the compartments (45) are arranged in a line, and that
end walls (35) separate the compartments (45) arranged at opposing ends of the line from end plates (26) of the housing (20), whereat the end walls (35) are configured like the intermediate walls (30).

10. Usage of a battery module (2) according to one of the preceding claims, in an electric vehicle (EV), in a hybrid electric vehicle (HEV) or in a plug-in hybrid vehicle (PHEV).

## Patentansprüche

1. Batteriemodul (2), umfassend:
ein Gehäuse (20) mit mehreren Fächern (45);
Zwischenwände (30), die benachbarte Fächer (45) und Elektrodenanordnungen (10) trennen, die in den Fächern (45) angeordnet sind,
**dadurch gekennzeichnet, dass**
die Zwischenwände (30) mindestens eine aus Kupfer gefertigte erste Schicht (31) und eine aus Aluminium gefertigte zweite Schicht (32) umfassen,
die Zwischenwände (30) so in das Material des Gehäuses (20) eingeführt sind, dass Ränder (81, 82) der Zwischenwände (30) von dem Material des Gehäuses (20) umgeben sind, und
Ränder (81) der ersten Schicht (31) eine strukturierte Oberfläche umfassen.

2. Batteriemodul (2) nach Anspruch 1, **dadurch gekennzeichnet, dass** die Ränder (82) der zweiten Schicht (32) eine strukturierte Oberfläche umfassen.

3. Batteriemodul (2) nach einem der vorhergehenden Ansprüche, **dadurch gekennzeichnet, dass** das Gehäuse (20) aus einem elektrisch isolierenden Material gefertigt ist, das Polyphenylensulfid (PPS) umfasst.

4. Batteriemodul (2) nach Anspruch 3, **dadurch gekennzeichnet, dass** das Material des Gehäuses (20) des Weiteren Glasfasern umfasst.

5. Batteriemodul (2) nach Anspruch 4, **dadurch gekennzeichnet, dass** die Menge an Glasfasern in dem Material des Gehäuses (20) in einem Bereich zwischen 27,5 % und 32,5 % liegt.

6. Batteriemodul (2) nach einem der vorhergehenden Ansprüche, **dadurch gekennzeichnet, dass** die zweite Schicht (32) mit Nickel beschichtet ist.

7. Batteriemodul (2) nach einem der vorhergehenden Ansprüche, **dadurch gekennzeichnet, dass** Kompensationselemente (75) in den Fächern (45) angeordnet sind.

8. Batteriemodul (2) nach Anspruch 7, **dadurch gekennzeichnet, dass** die Kompensationselemente (75) aus einem Vliesmaterial gefertigt sind.

9. Batteriemodul (2) nach einem der vorhergehenden Ansprüche, **dadurch gekennzeichnet** (45), dass die Fächer in einer Reihe angeordnet sind, und dass Endwände (35) die an gegenüber liegenden Enden der Reihe angeordneten Fächer (45) von Endplatten (26) des Gehäuses (20) trennen, wobei die Endwände (35) wie die Zwischenwände (30) ausgestaltet sind.

10. Verwendung eines Batteriemoduls (2) nach einem der vorhergehenden Ansprüche in einem Elektrofahrzeug (EV), einem Hybrid-Elektrofahrzeug (HEV) oder in einem Plug-in-Hybridfahrzeug (PHEV).

## Revendications

1. Module de batterie (2), comprenant
un boîtier (20) avec plusieurs compartiments (45), des parois intermédiaires (30) séparant des
compartiments adjacents (45) et
des ensembles d'électrodes (10) disposés dans les compartiments (45),
**caractérisé en ce que**
les parois intermédiaires (30) comprennent au moins une première couche (31) constituée de cuivre et une deuxième couche (32) constituée d'aluminium,
les parois intermédiaires (30) sont insérées dans le matériau du boîtier (20) de telle sorte que des bords (81, 82) des parois intermédiaires (30) sont entourés par le matériau du boîtier (20), et
des bords (81) de la première couche (31) comprennent une surface structurée.

2. Module de batterie (2) selon la revendication 1,
**caractérisé en ce que**
des bords (82) de la deuxième couche (32) comprennent une surface structurée.

3. Module de batterie (2) selon une des revendications précédentes, **caractérisé en ce que**
le boîtier (20) est constitué d'un matériau électriquement isolant qui comprend du polysulfure de phénylène (PPS).

4. Module de batterie (2) selon la revendication 3,
**caractérisé en ce que**
le matériau du boîtier (20) comprend en outre des fibres de verre.

5. Module de batterie (2) selon la revendication 4,
**caractérisé en ce que**
la quantité de fibres de verre dans le matériau du boîtier (20) se situe dans une gamme entre 27,5 % et 32,5 %.

6. Module de batterie (2) selon une des revendications précédentes, **caractérisé en ce que**
la deuxième couche (32) est recouverte de nickel.

7. Module de batterie (2) selon une des revendications précédentes, **caractérisé en ce que**
des éléments de compensation (75) sont disposés dans les compartiments (45).

8. Module de batterie (2) selon la revendication 7,
**caractérisé en ce que**
les éléments de compensation (75) sont constitués d'un matériau molletonné.

9. Module de batterie (2) selon une des revendications précédentes, **caractérisé en ce que**
les compartiments (45) sont disposés en ligne, et **en ce que**
des parois d'extrémité (35) séparent les compartiments (45) disposés à des extrémités opposées de la ligne de plaques d'extrémité (26) du boîtier (20), les parois d'extrémité (35) étant configurées comme les parois intermédiaires (30).

10. Utilisation d'un module de batterie (2) selon une des revendications précédentes dans un véhicule électrique (EV), dans un véhicule électrique hybride (HEV) ou dans un véhicule hybride rechargeable (PHEV).
